## Europäisches Patentamt
## European Patent Office
## Office européen des brevets

(19)

(11) Publication number: **0 063 378**
**B2**

(12)

# NEW EUROPEAN PATENT SPECIFICATION

(45) Date of publication of the new patent specification:
**04.10.89**

(51) Int. Cl.⁴: **B 29 C 49/46**

(21) Application number: **82103280.2**

(22) Date of filing: **19.04.82**

---

(54) Process and apparatus for producing blow molded thermoplastic articles having improved weld strength.

---

(30) Priority: **20.04.81 US 255959**

(43) Date of publication of application:
**27.10.82 Bulletin 82/43**

(45) Publication of the grant of the patent:
**10.07.85 Bulletin 85/28**

(45) Mention of the opposition decision:
**04.10.89 Bulletin 89/40**

(84) Designated Contracting States:
**BE DE FR GB IT LU NL**

(56) References cited:
**DE-A-1 479 288**
**DE-A-2 205 292**
**DE-A-2 401 948**
**DE-A-2 924 797**
**GB-A-1 397 513**
**US-A-2 811 468**
**US-A-3 065 501**
**US-A-3 168 207**
**US-A-3 862 284**
**US-A-4 021 517**

(73) Proprietor: **AIR PRODUCTS AND CHEMICALS, INC., P.O. Box 538, Allentown, Pennsylvania 18105 (US)**

(72) Inventor: **Barbanel, Joseph, 393 Melrose Place, South Orange New Jersey 07079 (US)**
Inventor: **Milcetich, Francis Anthony, 2444 Emaus Avenue Apartment 11, Allentown, PA 18103 (US)**
Inventor: **Maynard, Floyd, Route 1, Box 90, Homerville Georgia 31634 (US)**

(74) Representative: **Kador & Partner, Corneliusstrasse 15, D-8000 München 5 (DE)**

EP 0 063 378 B2

LIBER, STOCKHOLM 1989

## Description

This invention relates a process for blow molding an article which comprises the steps of
(1) extruding a thermoplastic material to form a parison closed at one end,
(2) introducing a gas into the open end of the parison as it is formed,
(3) closing the blow mold around the parison to seal off the open end thereof, and
(4) injecting a blowing gas into the closed parison until the parison conforms to the contour of said mold.

It is well known to blow mold bottles and other hollow articles from thermoplastic materials by extruding the materials through an annular extrusion nozze to form a tubular parison, blowing air through the parison to maintain it in an open position and, after the parson has been enclosed within a mold and both of its ends have been welded or sealed together to form a weld seam, injecting into the parison a compressed fluid or blowing gas, e. g. water, air, nitrogen, argon and the like, while it is still in a molten state; see U.S. Pat. No. 3 168 207.

It is also known to expand and simultaneously cool a thermoplastic preform or parison with, for example, LIN (liquefied nitrogen) so that both the expansion and cooling of the hollow article is done with the same medium; see British Pat. No. 1 397 513. A modification of this process is to blow air into the parison along with the LIN to intensify the expansion operation; see U.S. Pat No. 4 021 517.

Examples of thermoplastic materials or resins which have been employed in the production of blow molded articles include polymers and copolymers of polystyrene, polyacrylonitrile, polyvinyl chloride and polyolefins having at least one aliphatic mono-1-olefin with a maximum of 8 carbon atoms per molecule. The preferred types of thermoplastic materials for blow molding include polyolefin polymers and copolymers of ethylene, propylene, 1-butene, 1-pentene, 4-methyl-1-pentene, 3-methyl-1-butene and 3,3-dimethyl-1-butene.

The resulting blow molded bottles from the foregoing processes, particularly when polyolefins are used as the thermoplastic material, have the disadvantage of allowing the passage of non-polar solvents through the walls thereof. A post-treating method for improving barrier properties and rendering the blow molded polyolefin bottles relatively impermeable to the passage of such solvents is described in U.S. Pat. No. 2 811 468. In this process, the surface of the previously formed blow molded bottle is fluorinated with pure fluorine or a mixture of fluorine and air or nitrogen. The resulting fluorinated containers have been found to be greatly improved in their barrier properties with respect to hydrocarbon solvents.

A more efficient and economical process for obtaining hollow articles having improved barrier properties is described and claimed in U.S. Pat. No. 3 862 284, which process includes a step in which 0.1 to 10 % by volume fluorine is blended into a fluid medium prior to expanding the parison within the closed mold to conform the parison to the contour of the mold. One embodiment of this process is described and claimed in German OLS 2 924 797 in which an extruded parison is continuously formed, the fluorine/inert gas mixture is introduced as the parison is sealed off from the outside atmosphere, the parison is introduced into the blow mold and an inert pressurizing gas is injected into the blow mold to expand the parison within the mold. As set forth in greater detail in the examples below, it was quite unexpectedly found that containers produced by the process of the German OLS readily failed at the weld seam formed by pinching off the ends of the parison as the mold assumes a closed position. Although not wishing to be bound by the explanation, it is believed that the ends would not properly fuse together because the fluorine confined within the parison reacted with its ends to form a crystal fusion point. As a result of this, the finished bottle became separated at its weld seam during a standard bottle drop test. In fact, the bottles made in this manner can be separated at the weld seam by squeezing the bottle between one's hands.

The standard plastic bottle drop test comprises filling the bottle with water, capping the filled bottle with a metal closure and dropping the bottle from various heights onto a concrete floor. The height at which the bottle fails is recorded as evidenced by any noticeable split, tear or similar indication of weakness in the dropped container.

It has been recently published to use an open parison purge with nitrogen to prevent air from interfering with the fluorination process in a batch-type blow molding operations; see "Plastics Engineering", September 1978, pages 40 - 43. This allows the possibility of air preventing an adequate weld after the pinch-off.

It is recognized that nitrogen can be used as one of the gases in the hot welding process for welding two sheets of polyethylene film which is known to oxidize in the presence of air; see the "Plastics Engineering Handbook", McGraw Hill Publishing Company, pages 784 and 785, and "Plastics Engineering", April 1980. However, the fact that the welding process takes place entirely in an air atmosphere means that there is no recognition of combining this teaching of plastic welding with those of the blow molding prior art. In fact, if one were to combine such teachings, one would be directed to proceed in a contrary manner especially when one desires to produce a container that is impermeable to non-polar solvents.

## Brief summary of invention

Contrary to that disclosed in the nearest prior art, of German OLS 2 924 797, the process of the present invention overcomes its disadvantages in producing blow molded articles that have welds that are considerably stronger than those of the prior art.

In accordance with the present invention, a process is provided for blow molding an article which comprises the steps of

(1)   extruding a thermoplastic material to form a parison closed at one end;
(2)   introducing a gas into the open end of the parison as it is formed;
(3)   closing the blow mold around the parison to seal off the open end thereof, and
(4)   injecting a blowing gas into the closed parison until the parison conforms to the contour of said mold,

characterized in that the gas introduced into the open end of the parison is nitrogen containing at least 99,9 % by volume nitrogen and that the blowing gas comprises a mixture of 0.1 - 10 % by volume fluorine and the balance being nitrogen containing at least 99.9 % per volume nitrogen.

After the first two hollow articles or containers are recovered from the blow mold, each of the subsequent containers have improved weld strengths. The first and second containers from a given continuous blow molding operation have been found to have less weld strength than the subsequent containers. This is believed to be the result of oxygen in the air surrounding the open parison which prevents an adequate weld from occurring. After the first two containers have been produced, the interior of the subsequent closed parisons including the welds are formed completely in the absence of the surrounding atmosphere. The end of the parison opposite the extruder head, or the bottom end in a typical vertical extrusion operation, has been previously sealed closed in the presence of nitrogen as are all subsequent parisons during the continuous blow molding operation. The nitrogen is forced under pressure during the pre-blow step (2) into the parison against this closed end until the blow mold is closed around the parison and the top end of the parison is sealed closed. The closure of the mold around the parison simultaneously pinches off and cuts through the resulting weld seam above the parison within the blow mold. This results in the nitrogen being under a positive pressure within the closed parison. This is necessary to insure that the ends of the parison do not come into contact with an oxidizing agent before each end has been welded shut.

Once the parison containing the nitrogen under pressure is closed off from the surrounding atmosphere, the interior of the closed parison is injected with a blowing gas. This is done by piercing the outer wall of the parison by means of a blow pin or inflation needle and passing the blowing gas through openings in the needles until the parison conforms to the inner walls of the mold.

The blowing gas that is used comprises about 0.1 to 10 % by volume fluorine and the balance is nitrogen.

The avoidance of oxygen during the extrusion and pre-blow steps assures that no oxygen is present during the blowing step. The presence of oxygen has been found to be detrimental to the fluorine-containing blowing mixture; see "Plastics Engineering", September 1978, pages 40 - 43. In this embodiment the gaseous mixture is evacuated from the blow molded article while it is still in the mold by means described below in the "Detailed Description of Invention".

**Brief description of drawings**

Fig. 1   is a partially schematic plan view of one side of a suitable blow molding apparatus for carrying out one embodiment of the process of the present invention;
Fig. 2   is a partially schematic plan view of the front of a suitable apparatus for carrying out one embodiment of the present invention and illustrates the first two steps of this embodiment;
Fig. 3   diagrammatically illustrates the third step of one embodiment of the present invention;
Fig. 4   diagrammatically illustrates the fourth step of one embodiment of the present invention and the step of evacuating the blowing gas from the blow molded article in another embodiment of the present invention; and
Fig. 5   is a partially schematic plan view of a dual device for alternately injecting blowing gas into the parison and evacuating the blowing gas from the resulting container in still another embodiment of this invention.

**Detailed description of invention**

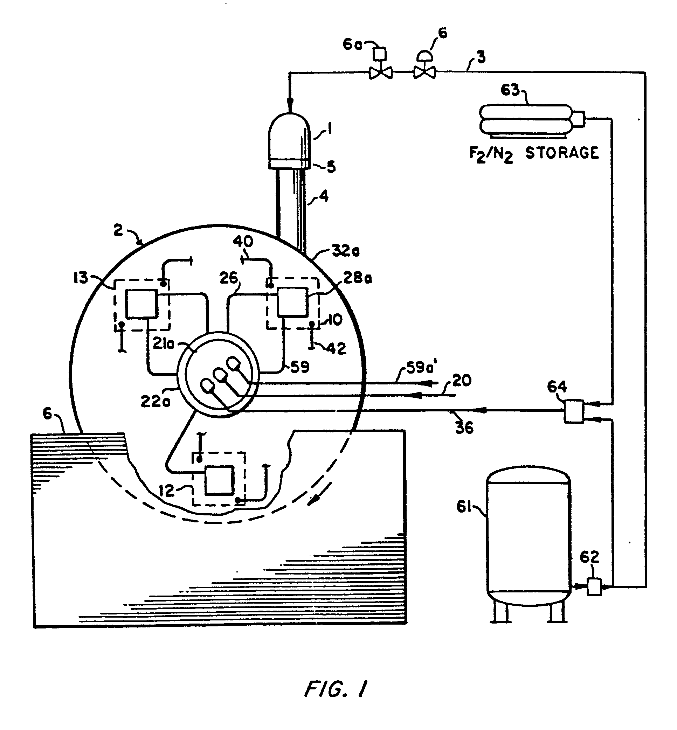

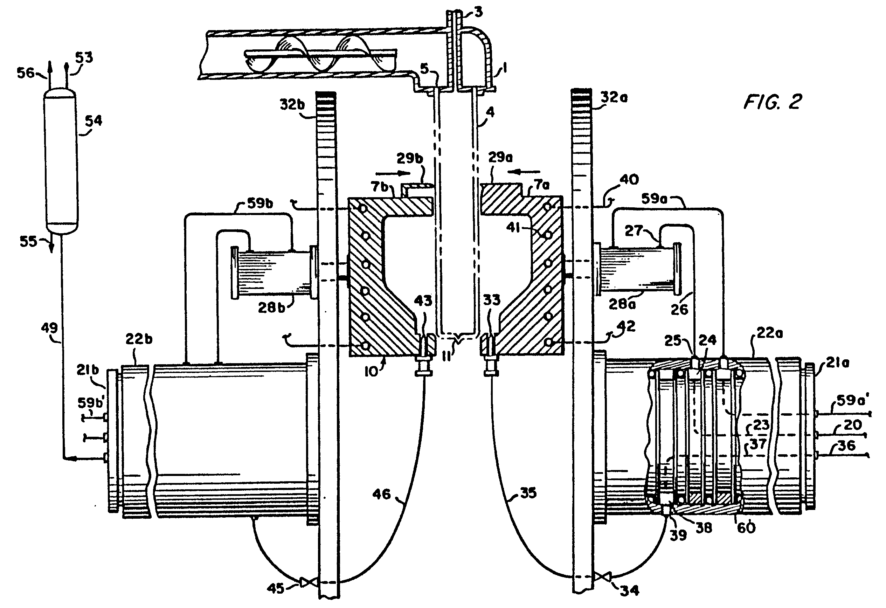

As shown in Figs. 1 and 2, one apparatus suitable for carrying out the process of the present invention includes conventional extruder 1 for forming an expandable parison closed at its bottom end, rotary wheel multimold machine 2 having a plurality of blow molds with internal surfaces corresponding to the containers to be produced and into which each of the expandable parisons are separately and sequentially introduced, pipeline 3 for supplying nitrogen gas during the extrusion step or pre-blow step (2) and other means described in detail below for introducing a fluorine/nitrogen gaseous medium into the interior of the expandable parisons and means for evacuating the blowing gas from the resulting blow molded containers.

In the embodiment of the present invention illustrated in Figs. 1 - 4, a polyethylene tubular parison 4 is continuously extruded from extruder head 5 of extruder 1 positioned above rotary wheel, blow molding machine 2 operably mounted on frame 6 for forming bottles or other hollow articles of approximately 5 gallon capacity or less from the extruded parison. Parison 4 is maintained in an inflated position by a stream of commercially pure nitrogen (99.9 % by volume) supplied through pipeline 3 to pressure the pre-blow system. The pressure for this system is established by means of regulator 6, preferably at a water pressure of at least 1 inch and up to about 5 inches. The nitrogen flow is shut-off when blow molder 2 is not in use by means of solenoid valve 6a.

Parison 4 extends between right mold half 7a and left mold half 7b of bottle mold 10 and terminates in weld seam 11 formed during a previous blow molding operation. During the startup of blow molder 2, this seam can be formed by hand. Bottle molds 12 and 13, shown in phantom in Fig. 1, are simultaneously subjected to separate steps in the blow molding process as described below.

The time limiting step for the blowing operation is that time it takes for the parison to become extruded to its full length between, for example, mold halves 7a and 7b. During the time of extrusion, the parison in the position shown for mold 12 is undergoing the blowing, and blowing gas evacuation steps. The mold halves open upon being rotated between the positions shown for molds 12 and 13. As the mold opens, the resulting blow molded bottle drops to a suitable conveyor (not shown) for transporting the bottle to deflashing and other finishing steps well known in the art. The mold halves (not shown) in the position shown for mold 13 are open awaiting rotation to a position under extruder 1 as shown in Fig. 2.

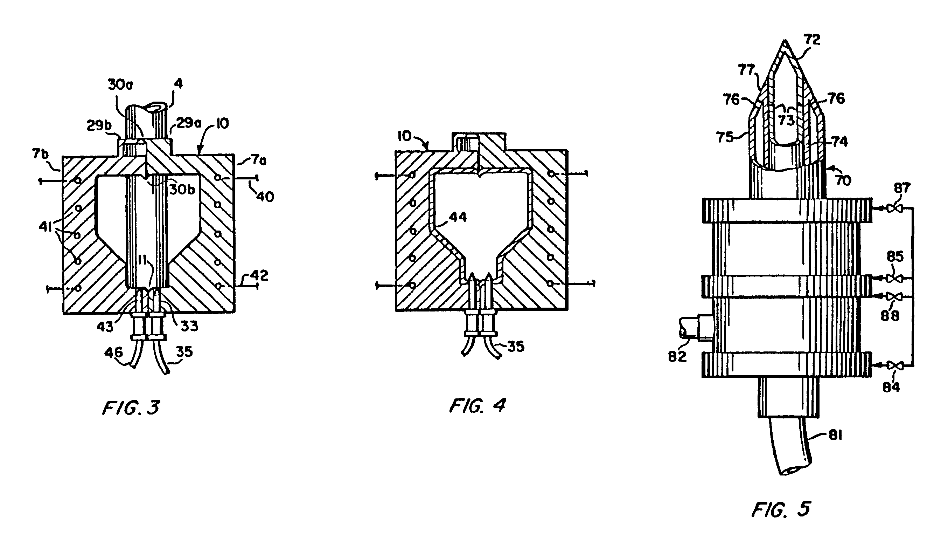

Each half of the bottle mold is operably connected to its respective mold clamp cylinder for activation in a conventional manner. As illustrated in Fig. 2, hydraulic fluid flows through line 20 which is connected to right distributor shaft 21a within right distributor housing 22a and flows through channel 23, shown by a dotted line in Fig. 2 that is drilled into shaft 21a. Channel 23 is in fluid communication with a hydraulic fluid port 24. The alignment of an opening in port 24 with cap plug 25 in housing 22a permits the hydraulic fluid to flow through line 26 and hydraulic fluid inlet port 27 in mold clamp cylinder 28a and to close mold 10. In the closed mold position shown in Fig. 3, knife edges 29a and 29b meet to sever parison 4 above mold 10 forming weld seams 30a and 30b (Fig. 3).

All of the elements on the left side of mold 10 with the exception of the blowing gas evacuation system described below are the mirror image of those elements on the right side of 10.

After each interval of time equal to the extrusion time referred to above, a pneumatic system (not shown) activates a suitable prime mover (not shown) connected to right housing 22a and left housing 22b, which prime mover rotates right wheel 32A and left wheel 32B.

This, in turn, rotates right and left mold clamp cylinders 28a and 28b mounted on wheels 32a and 32b, respectively. After the wheel 32a, rotates mold 10 in the position of mold 12 shown in Fig. 1, and mold 10 is closed, a pneumatic signal activates injection needle or blow pin 33. It is the rotation of housing 22a and housing 22b that opens and closes the hydraulic fluid ports in distributor shafts 21a and 21b, which shafts remain stationary.

During the time interval illustrated in Fig. 4, a pneumatic signal opens valve 34 in line 35. This permits the blowing gas entering distributor shaft 21a via line 36 to flow through the shaft in a similar manner to that described above in connection with the hydraulic system. The same pneumatic signal that opens valve 34 simultaneously activates blow pin 33 and causes it to puncture the bottom wall of parison 4 to the right of weld seam 11 and to retract the blow pin after the blowing step. During the blowing step, blowing gas passes through channel 37, port 38, cap plug 39, valve 34, line 35, blow pin 33, and a plurality of openings (not shown) in blow pin 33 and into the interior of parison 4 for a period of time to cause the parison to conform to the contour of mold 10 as shown in Fig. 4.

Throughout the blow molding operation the temperature of the interior surfaces of molds 10, 11 and 12 is controlled by cooling water. For example, the water is continuously circulated through inlet 40 on right half mold 7a, cooling coil 41 and outlet 42 in a similar manner of a prior art blow molding apparatus in which one, but preferably a plurality of, blow molds are mounted on a pair of opposing plates which rotate, carrying the molds with them as the mold dies thereof reciprocate towards and away from each other to open and close the mold cavities under action by hydraulic piston and cylinder units. Oil to and from the units passes through a distributor shaft in a rotating sleeve, on which shaft high and low pressure grooves are separated axially from each other. The lines for blowing and cooling respectively, also pass through the sleeve. The lines passing through rotary unions to distributor manifolds separate the distributor shaft and are rotatable with the sleeve.

By maintaining a continuous circulation of water through each mold, the resulting blow molded bottle is sufficiently cooled at the end of the blowing gas step to be ejected from the mold without additional allowance of time in the blowing cycle for cooling.

In the embodiment in which the blowing gas contains a component which would be harmful if allowed to discharge into the surrounding atmosphere. i. e. dilute fluorine-inert gas mixture, evacuation needle 43 pierces the bottom wall of parison 4, just to the left of weld seam 11 upon activation of the same pneumatic signal as that given to blow pin 33 and while parison 4 remains in a molten condition. It is not practical to pierce the neck of bottle 44 after it has been blown. Upon a separate pneumatic signal, valve 45 opens and the blowing gas within bottle 44 is evacuated through line 46 and line 49 in the reverse manner as that described above in connection with the blowing gas. The evacuated gas is passed to suitable exhaust facilities where it may be vented, incinerated or scrubbed. The nitrogen free of oxidizing gases may be recovered for recycle back to the blending system described below.

Fig. 2 also illustrates an absorption system in which the evacuated gas in line 49 is passed in countercurrent flow to water in line 53 within absorption or scrubber column 54. The fluorine or other absorbed gas dissolves in the water and is discarded to an appropriate wastewater facility through line 55. Alternately, a caustic scrubber can be used in place of the water scrubber. The nitrogen recovered in line 56 can be recycled for use in the pre-blow and/or blowing gas injection steps or it may be released to the atmosphere.

To avoid the possibility that a malfunction in blow molder 2 will release any harmful gas during operation into the atmosphere, an exhaust shroud (not shown) is provided and is connected to an exhaust fan (not shown). In addition, the exhaust shroud and fan serve to eliminate the nitrogen used in the pre-blow and for purging the mold, if necessary, from building up in the area surrounding the blow molder.

The exhaust fan is usually mounted adjacent to the outside wall of the building. The exhaust shroud and fan system has the following two functions: First, it should effectively dilute or scrub the gas stream from the normal purging operation and, second, it should contain the blow gas in the event of a machine malfunction causing a blowout. In the case of such a malfunction which would cause the parison to burst, the exhaust shroud is necessary to contain the resulting blast of air which serves to contain the fluorine. The shroud is connected to the exhaust fan which is designed to be large enough to insure that an operator entering the shroud after the malfunction has occurred is exposed to only a safe level of fluorine.

After mold 10 has undergone the evacuation, mold halves 7a and 7b open under hydraulic pressure through lines 59a and 59a' and 59b and 59b' in the same manner described above and wheels 32a and 32b rotate mold 10 into the position shown for mold 12 and mold 13 into the position shown for mold 10 in Fig. 1. The continuous blow molding cycle set forth above is repeated.

The separate ports within distributor shafts 21a and 21b for distributing the fluids used in the blow molding process are separated by packing rings, e. g. ring 60 shown in Fig. 2. The description of the preferred distributor housing and shaft construction is described above.

A blend system is shown in Fig. 1 for preparing a suitable blowing gas for the preferred embodiment of the present invention. Pure nitrogen, stored in a liquid form in tank 61, is vaporized in vaporizer 62 and blended with a commercially available higher concentration of fluorine in nitrogen mixture stored in cylinders 63, i. e. 10 % by volume fluorine and 90 % by volume nitrogen, in gas blender 64 to form the blowing gas mixture of the desired concentration ranging from about 0.1 to 10 % by volume fluorine. Upon a proper setting of blender 64 to achieve the desired ratio of $F_2/N_2$, the gaseous mixture flows through line 36 as discussed above.

Referring now to Fig. 5, dual device 70 comprises exhaust needle 72 having a plurality of openings 73 around the periphery of the upper portion of needle body 74 and blow pin 75 concentric to exhaust needle 72 and having a plurality of openings 76 in needle 77 of blow pin 75. Conduits 81 and 82 are connected to exhaust needle 72 and blow pin 75, respectively and can be used in place of blow pin 33 and exhaust needle 43 shown in Figs. 2 - 4. Upon activation of a timed pneumatic signal, air passes through valves 84 and 85 causing the upper portion of body 74 of needle 72, needle 77 of blow pin 75 to pierce the bottom of parison 4 on either side of seam 11 so that openings 73 and 76 are well within the parison. After the blowing gas through line 82 and openings 76 has caused the parison to assume the shape of the mold, air passes through valve 87 to retract blow pin 75 to its original position exposing openings 73. The blowing gas is evacuated through openings 73 and line 81 and is removed from the system in the manner discussed above. Air is then passed through valve 88 to retract exhaust needle 72 to its original position.

The process of this invention is primarily designed to produce relatively small containers, i. e. those which are five gallons in capacity or less. It would be impractical to construct a blow molding machine for carrying out the process of this invention to manufacture containers much greater than five gallons.

The invention is further illustrated by reference to the following examples:

## Example 1

Tests ware carried out to demonstrate the effect of pre-blowing at a pressure of about 1.5 inches of water with air (Test 1), a gaseous mixture comprising 1.5 % by volume fluorine and 98.5 % by volume commercially pure nitrogen as recommended in OLS 2 924 797 (Test 2) and commercially pure nitrogen (Test 3). High density pellets of polyethylene (0.92 gms./cc/) were fed to the extruder 1 operating at an average temperature of 200° C (about 390° F) and extruded through extruder head 5 maintained at about 200° C to form parison 4 closed at one end during a total elapsed time of 2 seconds as illustrated in Fig. 2. Each of these gases was respectively passed through line 3 during the extrusion of parison 4. The blowing step for each test in this example took 5 seconds using air as the blowing medium through blow pin 33 to produce a nominal 11,35 liter (2 1/2 gallon) jug. Water was circulated through cooling coils in the molds throughout the blowing molding operation.

The blown containers of test 2 were purged with nitrogen and the gases were evacuated to a vent system prior to ejecting the containers from the mold to prevent contamination of fluorine in the surrounding atmosphere. This step took about 8 seconds.

The containers were ejected from the mold and were each subjected to the same standard mold flashing removal and finishing steps. Each container had a bottom weld seam of approximately 0.011 cm. (0.0045 in.) thickness and an average wall thickness of approximately 0.074 cm. (0.029 in.).

After each of tests 1, 2 and 3, the resulting jugs were filled with 11,35 liter (2 1/2 gallons) of water, capped with a metal cap and dropped on to a concrete floor from a height of 1,22 m (4 feet). The container undergoing test 2 failed by bursting at its weld seam. The containers from tests 1 and 3 were then dropped from 1,98 m (6 1/2 feet). The container of test 1 burst at its weld seam from this height. The container of test 3 was then dropped from heights of 4,57; 9,15 and 10,67 m (15, 30 and 35 feet). At 10,67 m (35 feet), the container failed where the polyethylene sidewalls were the thinnest, but not at its weld seam. The results are tabulated in the table below where P equals passed and F equals failed at the weld seam.

| Test | | (1) | (2) | (3) |
|---|---|---|---|---|
| No. of trials | Height of drop | AIR | $N_2/F$ | $N_2$ |
| 1 | 1, 22 m (4 foot) | P | F | P |
| 4 | 1,98 m (6 1/2 foot) | F | | P |
| 1 | 4.57 m (15 foot) | | | P |
| 1 | 9,15 m (30 foot) | | | P |
| 1 | 10,67 m (35 foot) | | | * |

* Failure occurred at side panel of container, but not at the weld seam.

## Example 2

Tests were then carried out to see if the blowing gas introduced through blow pin 33 had any effect on the weld strength of the resulting container. It was found that no noticeable effect was recorded. In fact it was noted that when the blowing gas comprised a mixture of 1.5 % by volume fluorine in nitrogen, the final container had the same high weld strength of the container for test 3 above and had high impermeability to non-polar hydrocarbons such as toluene. In a standard toluene impermeability test described in Example 1 of U.S. 3 862 284, the 11,35 l (2 1/2 gallon) container retained only 5088 gms. of toluene after 30 days at 37,8°C (100°F). In contrast, the container of test 1, retained 8042 gms. of toluene for the same period.

Mixtures of between 0.5 and 2 % by volume fluorine and the balance nitrogen were also found to result in a satisfactory container from a weld strength and impermeability standpoint.

Various modifications to the process and apparatus described above are envisioned, for example the injection of the blowing gas can be supplemented by a provision of a vacuum circumjacent the outside of the parison.

## Claims

1. A process for blow molding an article which comprises the steps of

(1)     extruding a thermoplastic material to form a parison closed at one end;
(2)     introducing a gas into the open end of the parison as it is formed;
(3)     closing the blow mold around the parison to seal off the open end thereof, and
(4)     injecting a blowing gas into the closed parison until the parison conforms to the contour of said mold,

characterized in that the gas introduced into the open end of the parison is nitrogen containing at least 99,9 % by volume nitrogen and that the blowing gas comprises a mixture of 0.1 - 10 % by volume fluorine and the balance being nitrogen containing at least 99.9 % per volume nitrogen.

2. The process of claim 1, wherein step (5) is included and comprises evacuating the blowing gas from the resulting blow molded article after step (4) without contaminating the surrounding atmosphere.

3. The process of claim 2, wherein step (6) is included and comprises scrubbing the fluorine from the balance of the evacuated blowing gas from step (5) and recovering the resulting fluorine-free nitrogen.

4. The process of claim 3, wherein said fluorine-free nitrogen from step (6) is recycled for use in step (2) and/or in step (4).

5. The process of claim 3, wherein said fluorine-free nitrogen from step (6) contains at least 99,9 % by volume nitrogen.

## Patentansprüche

1. Verfahren zum Blasformen eines Gegenstandes, welches die Schritte umfaßt:

(1) Extrudieren eines thermoplastischen Materials zur Bildung eines an einem Ende geschlossenen Vorformlings,

(2) Einführen eines Gases in das offene Ende des Vorformlings bei dessen Formung,

(3) Schließen der Blasform um den Vorformling, um dessen offenes Ende zu verschließen und

(4) Einblasen eines Blasgases in den geschlossenen Vorformling, bis die Gestalt des Vorformlings der Kontur der genannten Form entspricht,
dadurch gekennzeichnet,
daß das in das offene Ende des Vorformlings eingeführte Gas Stickstoff ist, der mindestens 99,9 Vol.-% Stickstoff enthält, und daß das Blasgas eine Mischung aus 0,1 bis 10 Vol.-% Fluor und einem Rest Stickstoff umfaßt, der mindestens 99,9 Vol.-% Stickstoff enthält.

2. Verfahren nach Anspruch 1, worin eine Stufe (5) eingeschlossen ist, die das Evakuieren des Blasgases aus dem gebildeten blasgeformten Gegenstand nach der Stufe (4) ohne Kontaminierung der Umgebungsatmosphäre umfaßt.

3. Verfahren nach Anspruch 2, worin eine Stufe (6) eingeschlossen ist, die die Gaswäsche zur Entfernung des Fluors aus dem Rest des evakuierten Blasgases aus der Stufe (5) und die Wiedergewinnung des erhaltenen fluorfreien Stickstoffes umfaßt.

4. Verfahren nach Anspruch 3, worin der fluorfreie Stickstoff aus der Stufe (6) zur Verwendung in Stufe (2) und/oder in Stufe (4) zurückgeführt wird.

5. Verfahren nach Anspruch 3, worin der fluorfreie Stickstoff aus der Stufe (6) mindestens 99,9 Vol.-% Stickstoff enthält.

**Revendications**

1. Procédé pour mouler par soufflage un article qui comprend les étapes consistant à:

(1) extruder une matière thermoplastique pour former une paraison fermée à une extrémité;

(2) introduire un gaz par l'extrémité ouverte de la paraison à mesure qu'elle est formée;

(3) fermer le moule de soufflage autour de la paraison pour fermer son extrémité ouverte de façon étanche; et

(4) injecter un gaz de soufflage dans la paraison fermée jusqu'à ce que ladite paraison soit conformée selon le contour dudit moule,
caractérisé en ce que le gaz introduit par l'extrémité ouverte de la paraison est de l'azote contenant au moins 99,9 % en volume d'azote et en ce que le gaz de soufflage comprend un mélange de 0,1 à 10 % en volume de fluor et le reste par de l'azote contenant au moins 99,9 % en volume d'azote.

2. Procédé selon la revendication 1, dans lequel l'étape (5) est incluse et comprend l'évacuation du gaz de soufflage de l'article moulé par soufflage résultant après l'étape (4) sans contaminer l'atmosphère environnante.

3. Procédé selon la revendication 2, dans lequel l'étape (6) est incluse et comprend la purification du fluor du reste du gaz de soufflage évacué à l'étape (5) et la récupération de l'azote exempt de fluor qui en résulte.

4. Procédé selon la revendication 3, dans lequel ledit azote exempt de fluor provenant de l'étape (6) est recyclé pour être utilisé à l'étape (2) et/ou à l'étape (4).

5. Procédé selon la revendication 3, dans lequel ledit azote exempt de fluor provenant de l'étape (6) contient au moins 99,9 % en volume d'azote.

FIG. 1

FIG. 2

FIG. 5

FIG. 4

FIG. 3